# EUROPÄISCHE PATENTSCHRIFT

(11) **EP 2 216 120 B1**
(45) Veröffentlichungstag und Bekanntmachung des Hinweises auf die Patenterteilung: **18.04.2018**
(21) Anmeldenummer: 09001615.5
(22) Anmeldetag: 05.02.2009
(51) Int. Cl.: B23K 9/16, B23K 9/173, B23K 9/02, B23K 9/29

(54) **Schutzgasrohr und Kontaktrohr einer Vorrichtung zum verbesserten Engspaltschweißen**
Protective gas pipe and contact pipe of a device for improved narrow gap welding
Tuyau à gaz de protection et tuyau de contact d'un dispositif destiné à la soudure améliorée d'intervalles serrés

(43) Veröffentlichungstag der Anmeldung: 11.08.2010
(73) Patentinhaber: Siemens Aktiengesellschaft, 80333 München (DE)
(72) Erfinder: Gunzelmann, Karl-Heinz, 90491 Nürnberg (DE)

(56) Entgegenhaltungen:
- WO-A-2007/050689
- DE-A1- 3 220 242
- DE-A1- 3 841 325
- GB-A- 1 492 226
- US-A- 2 827 550
- US-A- 4 289 950
- US-A- 4 672 163
- US-B1- 6 495 798

## Beschreibung

Die Erfindung betrifft ein Verfahren zum Engspaltschweißen mit dem MSG-Schweißverfahren, bei dem die Schweißeinrichtung in der Schweißfuge geführt und dabei mindestens eine durch ein Schutzgasrohr geleitete abschmelzende Drahtelektrode unter Schutzgas mit einer vorgegebenen Drahtvorschubgeschwindigkeit dem Schweißbereich zugeführt wird, und bei dem die Parameter Schweißstrom, Elektrodendraht-Vorschub und Schutzgasrohrabstand derart eingestellt werden, dass sich am Ende der Drahtelektrode ein rotierender Lichtbogen ausbildet. Das MSG-Schweißen ist aufgrund seiner vielseitigen Einsetzbarkeit, guten Mechanisierbarkeit und hohen Produktivität eines der am meist verbreiteten Lichtbogen-Schmelzschweißverfahren. Die Wirtschaftlichkeit dieses bekannten Verfahrens kann dabei noch weiter verbessert werden, wenn der erforderliche Fugenquerschnitt reduziert und zum Engspaltschweißen übergegangen wird. Bei den tiefen und engen Schweißfugen bereitet jedoch das Einführen der Schweißeinrichtung in die Fuge und die Positionierung der abschmelzenden Drahtelektrode zu den zu verbindenden Werkstückflanken Probleme. Die Gefahr von Bindefehlern an den Werkstückflanken ist dadurch relativ hoch, insbesondere bei brenngeschnittenen Werkstückflanken und daraus resultierenden großen Spalttoleranzen. Beim Engspaltschweißen mit dem MSG-Schweißverfahren sollte sich der zwischen Drahtelektrode und Werkstückerzeugte Lichtbogen abwechselnd zu beiden Werkstückflanken ausbilden. Dies wird bislang durch eine mechanische Auslenkung der Drahtelektrode realisiert, wobei hier zwischen statischen und dynamischen Verfahrensprinzipien unterschieden wird. Bei den statischen Verfahrensprinzipien werden zwei Drahtelektroden derart plastisch verformt oder mechanisch geführt, dass die Enden der Drahtelektroden jeweils zu einer Werkstückflanke hin ausgelenkt sind. Bei den dynamischen Verfahrensprinzipien pendeln die Enden einer Drahtelektrode zwischen beiden Werkstückflanken hin und her oder es werden zwei verdrillte Drahtelektroden zugeführt, die dann beim Abschmelzen verschiedene Lagen bezüglich der Werkstückflanken einnehmen.

Aus Narrow Gap Welding-The State-of the-Art in Japan, The Japan Welding Soc., Tokio, 1986, Seiten 65 bis 73, ist eine weitere zu den dynamischen Verfahrensprinzipien zählende Variante bekannt, bei welcher die Drahtelektrode durch einen rotierenden Drahtrichtsatz zu einer Wendel plastisch verformt wird und sich somit durch den Abschmelzvorgang eine Rotationsbewegung des Endes der Drahtelektrode ergibt.

Aus der EP-A-0 557 757 ist ein Verfahren zum Engspaltschweißein der eingangs genannten Art bekannt, bei welchem ohne eine mechanisch bewirkte Elektrodenbewegung die Parameter Schweißstrom, Elektrodendraht-Vorschub und Schutzgasrohrabstand derart eingestellt werden, dass der übliche axiale Werkstoff-Übergang durch einen rotierenden Werkstoff mit rotierendem Lichtbogen abgelöst wird. Dokument US 6 495 798 offenbart eine Vorrichtung zum Engspaltschweißen gemäß dem Oberbegriff des Anspruchs 1. Sowohl beim Engspaltschweißen mit einer ausgelenkten Drahtelektrode als auch beim Engspaltschweißen mit einer Eigenrotation des Lichtbogens ist die überbrückbare Schweißfugenbreite begrenzt, so dass bei fertigungsbedingten größeren Spaltbreiten die Gefahr von Flankenbindefehlern besteht.

Der Erfindung liegt die Aufgabe zugrunde, eine Vorrichtung zum Engspaltschweißen mit dem MSG-Schweißverfahren zu schaffen, bei welchem auch bei größeren Spaltbreiten und insbesondere bei fertigungsbedingten Spalttoleranzen gute Schweißergebnisse gewährleistet werden kann.

Diese Aufgabe wird durch eine Vorrichtung gemäß Anspruch 1 und durch ein gattungsgemäßes Verfahren zum Engspaltschweißen gemäß Anspruch 13 gelöst.

Vorteilhafte Ausgestaltungen der Erfindung sind in den Unteransprüchen angegeben.

Die Lösung ist jeweils gegeben durch:
- eine Vorrichtung (SE),
   insbesondere zum Engspaltschweißen,
   die ein Schutzgasrohr (60) aufweist,
   innerhalb dessen (60) ein Kontaktrohr (27) mit einer Drahtzufuhr (28) für einen Schmelzdraht (30) angeordnet ist,
   wobei das Schutzgasrohr (60) zumindest am Ende (31), insbesondere nur am Ende (31),
   Materialien mit hoher thermischer Wärmeleitfähigkeit aufweist,
   wobei insbesondere das metallische Material am Ende (31) des Schutzgasrohres (60) eine höhere thermische Wärmeleitfähigkeit aufweist als am Anfang (23) des Schutzgasrohres (60),
   ganz insbesondere Molybdän (Mo) oder Wolfram (W) oder deren Legierungen, oder Kupfer (Cu) oder eine Kupferlegierung
   aufweist,

Diese oben genannten einzelnen Ideen können jeweils durch eine oder mehrere folgende Maßnahmen verbessert werden, wenn
- das Schutzgasrohr (60) rechteckig ausgebildet ist,
- das Schutzgasrohr (60) eine aktive Kühlung aufweist, insbesondere Kühlrohre und
   insbesondere am Ende (31),
- das Schutzgasrohr (60) zumindest am Ende (31), insbesondere nur am Ende (31),
   Materialien mit hoher thermischer Wärmeleitfähigkeit aufweist,
   wobei insbesondere das metallische Material am Ende (31) des Schutzgasrohres (60) eine höhere thermische Wärmeleitfähigkeit aufweist als am Anfang des Schutzgasrohres (60),
   ganz insbesondere Molybdän (Mo) oder Wolfram (W) oder deren Legierungen, oder Kupfer (Cu) oder eine Kupferlegierung
   aufweist,
- das Schutzgasrohr (60) am Ende (28),
   insbesondere nur am Ende (28),
   keramisch ausgebildet ist,
- das Kontaktrohr (27) aus einem inneren Kern (34) aus einem zweiten Material und
   einem äußeren Mantel (37) aus einem ersten Material aufgebaut ist,
   wobei der Mantel (37) den inneren Kern (34) größtenteils, insbesondere mindestens zu 90% umhüllt, wobei das erste Material (37) von dem zweiten Material (34) verschieden ist,
   insbesondere dass das zweite Material (34) eine Legierung mit hoher Wärmeleitfähigkeit aufweist,
   ganz insbesondere dass die Wärmeleitfähigkeit des zweiten Materials (34) höher ist als die des ersten Materials (34),
   insbesondere dass das zweite Material (34) Kupfer oder eine Kupferlegierung ist,
- das Kontaktrohr (27) aus einem inneren Kern (34) und einem äußeren Mantel (37) aufgebaut ist,
   wenn das Kontaktrohr (27) zumindest am Ende (43), insbesondere nur am Ende (43),
   auf der äußeren Mantelfläche eine Antihaftbeschichtung (49),
   insbesondere eine keramische Beschichtung (13) aufweist, und wenn die Beschichtung (49) auf dem Mantel (37) oder dem inneren Kern (34) aufgebracht ist,
- das Kontaktrohr (27) aus einem inneren Kern (34) und einem äußeren Mantel (37) aufgebaut ist und
   wenn der innere Kern (34) nur am Ende (43) des Kontaktrohrs (27) einen Teil (52) der äußeren Mantelfläche des Kontaktrohrs (27) bildet,
- das Kontaktrohr (27) ein Ende (43) mit einer Stirnseite (44) und eine Längsachse (r) aufweist und
   dass die Längsachse (r) einen von 90° verschiedenen Winkel mit der Stirnseite (44) des Endes (43) bildet,
- das Kontaktrohr (27) am Ende eine Kontaktdüse (25) aufweist,
- wenn das Kontaktrohr (27) eine Mantelfläche aufweist, und wenn ein Ende der Kontaktdüse (25) nicht hinausragt über eine in Längsrichtung des Kontaktrohrs (27) gedachte Verlängerung (46) der Mantelfläche,
- das Kontaktrohr (27) kühlbar ist,
   insbesondere im Innern (34),
- die Antihaftbeschichtung (13), insbesondere die keramische Beschichtung (13) sich nicht über die äußere Oberfläche (55) erstreckt,
   die durch den inneren Kern (34) des Kontaktrohrs (27) gebildet ist,
- das Schutzgasrohr (60) am äußersten Ende (13) keramisch (28) ausgebildet ist und
   oberhalb des keramischen Teils (28) ein Block (31) mit erhöhter Wärmeleitfähigkeit vorhanden ist,
- bei dem die Drahtzufuhr (28) vor dem Austritt aus dem Kontaktrohr (27) einen geknickten Verlauf für den Draht (30) aufweist.

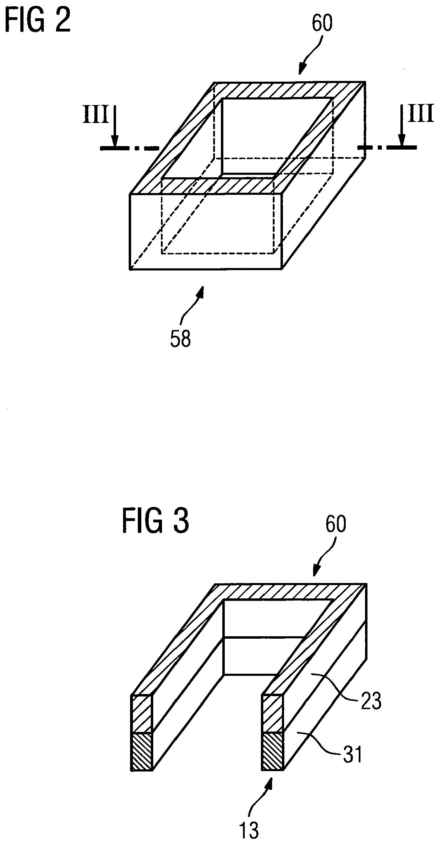

Die Figuren 2 bis 12 zeigen Ausführungsbeispiele der Erfindung.

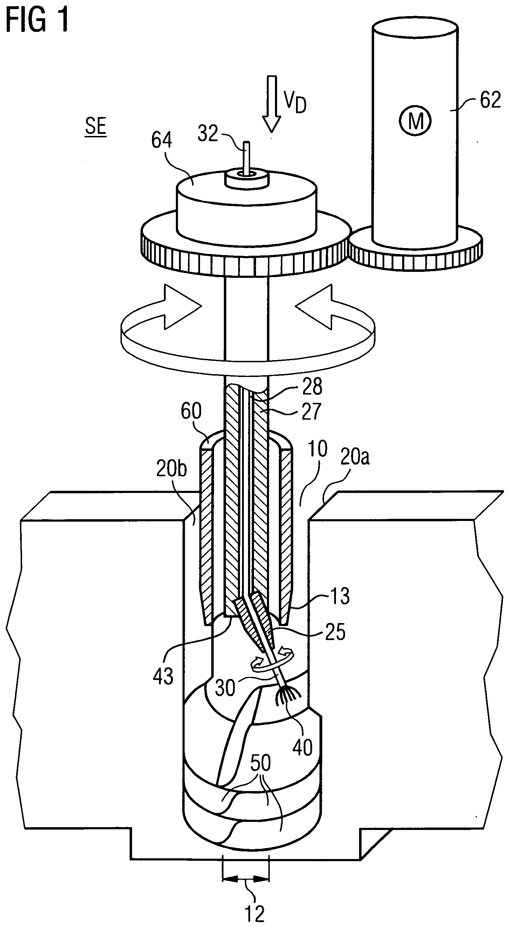

Das Engspalt-Schweißverfahren, insbesondere das Unterpulver-Engspalt-Schweißverfahren wird vorzugsweise mit einer Schweißeinrichtung SE durchgeführt, wie sie schematisch in der Figur 1 gezeigt ist und ist anstatt der Zufuhr eines Drahtes auch mit einer Pulverzufuhr möglich.

Mit Hilfe dieses Schweißverfahrens werden vorzugsweise gegenüberliegende Werkstücke entlang ihrer Werkstückflanken 20a, 20b mit Hilfe einer Schweißnaht verbunden. Die Schweißeinrichtung SE umfasst eine Drahtelektrode 30, die innerhalb eines Schutzgasrohrs 60 in einem Kontaktrohr 27 mit Drahtzufuhr der zu schweißenden Position zugeführt wird. Die Drahtelektrode 30 wird über eine Zufuhr 32 mit einer Geschwindigkeit VD der Schweißposition zugeführt und tritt an der metallischen Kontaktdüse 25 aus.

Anstelle des Drahts kann auch Pulver hinzugeführt werden.

Das Schutzgasrohr 60 mit Drahtelektrode 30 ist vorzugsweise über ein Getriebe 64 mit einem Motor 62 verbunden. Der Motor 62 erzeugt durch Drehen in wechselnde Richtungen eine Pendelbewegung der Drahtelektrode 30 innerhalb des Spalts 10, deren Amplitude einstellbar ist. Die Schweißeinrichtung SE wird im Verhältnis zu den von oben sichtbaren Werkstückflanken 20a, 20b innerhalb des Spalts 10 positioniert und bewegt, während der Motor 62 die Pendelbewegung mit gewünschter Amplitude der Drahtelektrode 30 innerhalb des Spalts 10 erzeugt. Über die Parameter Schweißstrom, Schweißspannung, Elektrodendraht-Vorschub und Abstand zwischen der obersten Raupe 50 bzw. der letzten Schweißlage und dem Schutzgasrohr 60 wird der Lichtbogen 40 der Schweißeinrichtung SE eingestellt. Dieser Lichtbogen 40 kann mit Hilfe seiner Parameter sowohl als starrer oder als ein rotierender Lichtbogen 40 konfiguriert sein. Um eine optimale Schweißnaht mit hoher Lebensdauer zu erzeugen, führen die Drahtelektrode 30 und der Lichtbogen 40 eine über den Motor 62 erzeugte Pendelbewegung zwischen einer der Werkstückflanken 20a, 20b und einem mittleren Bereich 12 des Spalts 10 aus und bewegen sich gleichzeitig entlang des Spalts 10. Auf diese Weise wird eine erste Raupe 50 erzeugt, die direkt an eine der Werkstückflanken 20a, 20b angrenzt und sich bis annähernd zur Mitte des Spalts 10 erstreckt (vgl. Fig. 2). Die erste Raupe 50 einer Lage füllt den Spalt 10 nur teilweise aus, so dass eine vollständige Lage aus mindestens zwei nebeneinander angeordneten Raupen 50 gebildet wird. Beim Bilden einer Lage kann die Anzahl der Raupen 50 beispielsweise in Abhängigkeit von der Breite des Spalts 10 oder von der für das Schweißverfahren zur Verfügung stehenden Zeit gewählt werden. Nachdem die erste Raupe 50 zwischen einer der Werkstückflanken 20a, 20b und dem mittleren Bereich 12 des Spalts gebildet worden ist, wird die auf der Raupe 50 befindliche Schlackeschicht (nicht gezeigt) entfernt, nachdem das Pulver des Unterpulver-Engspalt-Schweißverfahrens aus dem Spalt 10 beispielsweise abgesaugt worden ist. Durch das Ausbilden der Raupe 50 zwischen nur einer Werkstückflanke 20a und dem mittleren Bereich 12 des Spalts 10 wird verhindert, dass sich die Schlackeschicht zwischen den gegenüberliegenden Werkstückflanken 20a und 20b verspannt und dadurch ein Entfernen erschwert oder sogar unmöglich macht. Durch die oben beschriebene Pendelbewegung wird daher eine Raupe 50 erzeugt, die einerseits eine optimale Qualität aufweist und von der andererseits die sich auf ihr abscheidende und aushärtende Schlacke leicht entfernt werden kann. Zudem kann die Breite der Raupe 50 gezielt an die Breite des Spalts 10 angepasst werden. Um die Breite des Spalts 10 weiter verkleinern zu können, werden beispielsweise dünnere Drahtelektrodendurchmesser im Rahmen des Unterpulver-Engspalt-Schweißverfahrens eingesetzt. Beim Unterpulver-Engspalt-Schweißverfahren kann die Position der erzeugten Raupe 50 im Verhältnis zu den Werkstückflanken 20a, 20b während des Schweißvorgangs nicht visuell kontrolliert werden. Daher wird das obige Verfahren ausgeführt, während die Schweißeinrichtung SE im Verhältnis zu den von oben sichtbaren Werkstückflanken 20a, 20b positioniert und entlang des Spalts 10 bewegt wird. Aus der Pendelbewegung heraus ist eine aktuelle Anpassung der Breite der Pendelbewegung und der Zuordnung des Drahtelektrodenendes zur Werkstückflanke 20a, 20b über die Motorsteuerung kontinuierlich möglich.

Gemäß einer weiteren vorzugsweisen Ausführungsform ist es gerade beim Unterpulver-Engspalt-Schweißverfahren vorteilhaft, den Lichtbogen 40 als Sensor zum Erfassen der Position des Lichtbogens 40 im Verhältnis zu den Werkstückflanken 20a, 20b und zu der bereits erzeugten Raupe 50 oder einer kompletten Lage einzusetzen. Im Zusammenspiel mit dem Lichtbogen 40 und seinen Parametern als Sensor ist damit auch beim Unterpulver-Engspalt-Schweißen ohne visuelle Beobachtungs- und Eingriffsmöglichkeiten ein automatisches Nachführen der Schweißeinrichtung SE zur Werkstückflanke wie bei den offenen Lichtbogenverfahren (WIG, MIG/MSG) erreichbar. Zu diesem Zweck wird zunächst die Lichtbogen-Konfiguration durch die Auswahl von Schweißspannung und/oder Schweißstrom vorgegeben. Während des Schweißverfahrens werden die tatsächliche Schweißspannung und/oder der tatsächliche Schweißstrom an der Drahtelektrode 30 erfasst und ausgewertet. Das Auswerten dieser Daten liefert die Position des Lichtbogens 40 im Verhältnis zu den angrenzenden Werkstückflanken 20a, 20b und zur Unterseite des Spalts 10, die durch eine vollständige Lage oder eine Raupe 50 gebildet wird. Nach dem Eliminieren von Störungen aus den erfassten Daten, beispielsweise Rauschen, kann man erkennen, dass die Schweißspannung/Schweißstrom-Charakteristik des Lichtbogens 40 empfindlich auf die Entfernung zwischen Drahtelektroden 30 und Werkstück reagiert. Auf diese Weise ist eine Positionskontrolle des Lichtbogens 40 anhand der erfassten tatsächlichen Schweißdaten möglich. Die aus den Schweißdaten des Lichtbogens 40 erfasste tatsächliche Position des Lichtbogens 40 wird an die Steuerung der Schweißeinrichtung SE übermittelt, um - wenn erforderlich - die Bewegung der Schweißeinrichtung SE entlang des Spalts und/oder die Pendelbewegung der Drahtelektrode 30 auf Grundlage der gespeicherten Vorgaben für den Schweißvorgang zu korrigieren. Basierend auf diesem Verfahren ist es möglich, ein genaues Unterpulver-Engspalt-Schweißen ohne Sichtkontakt zur erzeugten Raupe 50 durchzuführen. Des Weiteren erfolgt keine Beeinträchtigung der Schweißnaht durch die sich auf der jeweiligen Raupe 50 ausbildende Schlackeschicht, da diese leicht entfernbar ist. Wird vorzugsweise eine Drahtelektrode 30 mit einem Durchmesser von 1,2 mm verwendet, lässt sich eine Unterpulver-Engspalt-Naht von etwa 12 mm Fugenbreite erreichen und sicher verschweißen.

Die Figur 2 zeigt ein Schutzgasrohr 60 im Querschnitt, das vorzugsweise rechteckig ausgebildet ist.

Zumindest das Ende 28 des Schutzgasrohrs 60 ist rechteckig ausgebildet.
So ist durch die rechteckige Ausbildung des Schutzgasrohrs 60 mehr Masse vorhanden, so dass eine Erwärmung nicht so schnell aufgrund der Trägheit der größeren Masse des Schutzgasrohrs 60 erfolgt.

Zumindest das Ende 28 des Schutzgasrohrs 60 ist rechteckig ausgebildet.
So ist durch die rechteckige Ausbildung des Schutzgasrohrs 60 mehr Masse vorhanden, so dass eine Erwärmung nicht so schnell aufgrund der Trägheit der größeren Masse des Schutzgasrohrs 60 erfolgt.
Im Stand der Technik sind die Schutzgasrohre rund ausgebildet, damit sie wenig Masse aufweisen. Hier wird genau das Gegenteil gewollt.

Vorzugsweise weist das Schutzgasrohr 60 eine Kühlung auf. Vorzugsweise ist die Kühlung im Inneren des Schutzgasrohrs 60 ausgebildet (nicht dargestellt). Vorzugsweise wird eine Wasserkühlung verwendet.
Besonders vorzugsweise wird das Schutzgasrohr 60, vorzugsweise an den Stirnseiten, über Kühlleitungen gekühlt (nicht dargestellt).
Die Kühlleitungen sind vorzugsweise als Rohre an der Innenfläche des Schutzgasrohrs 60 vorhanden und thermisch mit diesem 60 verbunden, vorzugsweise durch Löten oder Schweißen. Die Kühlleitungen können auch integral in dem Schutzgasrohr 60 ausgebildet sein.
Die aktive Kühlung bezieht sich ganz allgemein auf jede beliebige Form eines Schutzgasrohrs 60 (Figur 3).
Die Kühlung erstreckt sich vorzugsweise bis zum Ende 13 des Schutzgasrohrs 60, zumindest bis zum Ende des metallischen Anteils des Schutzgasrohrs 60 (Fig. 3).
Auch durch die aktive Kühlung wird verhindert, dass das Schutzgasrohr 60 anschmilzt und dass das Schutzgas, das aus dem Schutzgasrohr 60 strömt, sich nicht erwärmt (Dichteabnahme).

Bei der Ausbildung gemäß Figur 3 (Schnitt durch Fig. 2) weist das ebenfalls vorzugsweise rechteckig ausgebildet Schutzgasrohr 60 in einem Block 31 zumindest am Ende 13, insbesondere nur am Ende 13 vorzugsweise Kupfer oder eine Kupferlegierung auf.

Jedenfalls weist der Block 31 am Ende 13 des Schutzgasrohrs 60 eine höhere Wärmeleitfähigkeit auf als der obere Teil 23 des Schutzgasrohrs 60.
Das Ende 31 bedeutet in Längsrichtung des Schutzgasrohres 60 gesehen ≤ 30% der Länge des Schutzgasrohres 60.
Das Ende 13 des Schutzgasrohres 60 ist dort, wo aus der Drahtzufuhr 27 der Draht 30 austritt.
Der obere Teil 23 ist vorzugsweise länger ausgebildet als der Block 31.

Durch den Kupferblock 31 des Schutzgasrohrs 60 gelingt es besser die Wärme abzuführen, die im Spalt 10 während des Schweißens entsteht.

Ebenso vorzugsweise wird auch hier das Schutzgasrohr 60, vorzugsweise an den Stirnseiten, über Kühlleitungen gekühlt (nicht dargestellt).

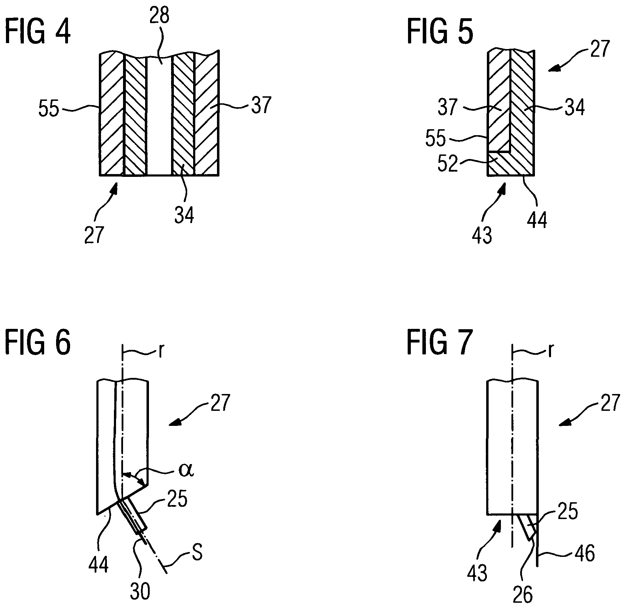

Figur 4 zeigt das Kontaktrohr 27 im Querschnitt.
Das Kontaktrohr 27 mit der Drahtzufuhr 28 besteht im inneren Kern 34 (34 ist hohl ausgebildet) aus einem ersten Material, vorzugsweise kupferhaltigen Material und außen (Mantel) 37 aus einer nichtkupferhaltigen metallischen Material. Das erste Material im inneren Kern 34 weist vorzugsweise eine höhere thermische Wärmeleitfähigkeit auf als das zweite Material, ist also verschieden von dem zweiten Material. Insbesondere wird der innere Kern 34 gekühlt (nicht dargestellt). Vorzugsweise wird ein Kupferrohr 34 und ein nicht kupferhaltiges Rohr 37 verwendet.

Vorzugsweise wird für das äußere Rohr, den Mantel 37 ein Stahl verwendet.
Der Manteil 37 liegt direkt auf dem inneren Kern 34 auf und ist vorzugsweise mit diesem verbunden.

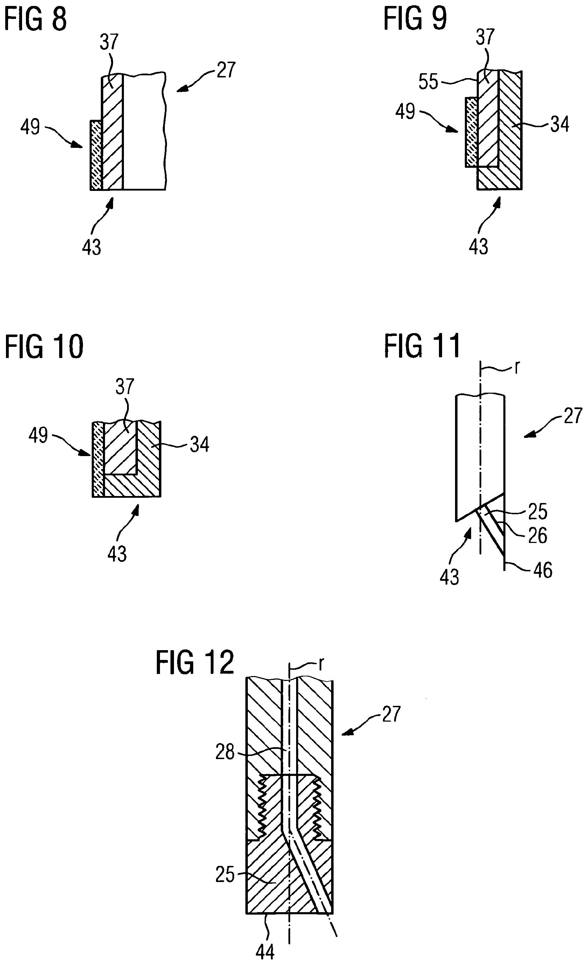

Der Mantel 37 umhüllt den inneren Kern 34 mindestens zu 90% an seiner Mantelfläche 34 (Fig. 9, 10).

Ebenso kann das Kontaktrohr 27 aus einem Material bestehen und gekühlt werden.

In Figur 5 ist eine besondere Ausführungsform der Figur 4 dargestellt, bei dem die äußere Oberfläche 55 des Kontaktrohrs 27 am Ende 43 des Kontaktrohrs 27 ebenfalls durch das erste Material, also vorzugsweise ein kupferhaltiges Material gebildet wird, d.h. der innere Kern 34 ist hier L-förmig ausgebildet und stellt ein Teil der äußeren Oberfläche, d.h. ein Teil der Mantelfläche 55 des Kontaktrohrs 27 dar sowie die Stirnseite 44 des Kontaktrohrs 27.

In Figur 6 ist ein weiteres Ausführungsbeispiel des Kontaktrohrs 27 dargestellt.
Die Stirnseite 44 des Kontaktrohrs 27 ist hier schräg ausgebildet. Schräg bedeutet, dass der Winkel α zwischen der Stirnseite 44 (eine Ebene) und der Drehachse/Längsachse r des Kontaktrohrs 27 von 90° verschieden ist.

Eine Kontaktdüse 25 ist im Querschnitt dünner als das Kontaktrohr 27. Vorzugsweise ist die Kontaktdüse 25 senkrecht auf der schrägen Stirnseite 44 ausgebildet, d.h. eine Längsachse S der Kontaktdüse 25 steht senkrecht auf der Stirnseite 44.

In Figur 7 ist eine weitere schematische Darstellung des Kontaktrohrs 27 gezeigt.
Die äußere Mantelfläche des Kontaktrohrs 27 bildet über das Ende 43 des Kontaktrohrs 27 eine weitere gedachte Umhüllung 46. Die Kontaktdüse 25 geht vorzugsweise mit ihrer äußersten Spitze 26 nicht über die Umhüllung 46 hinaus.
Dies gilt vorzugsweise auch für eine schräge Stirnseite 44 gemäß Fig. 6, wie es in Fig. 11 dargestellt ist.

Figur 8 zeigt, dass das Kontaktrohr 27 am Ende 43, insbesondere nur am Ende 43 eine Antihaftbeschichtung 49, insbesondere eine keramische Schicht 49 aufweist.
Durch die Beschichtung 49 wird vermieden, dass sich Schweißmaterial auf dem Kontaktrohr 27 abscheidet.

Das Ende 43 bedeutet in Längsrichtung des Kontaktrohres 27 gesehen ≤ 30% der Länge des Kontaktrohres.

Die keramische Beschichtung 49 ist eine keramische Beschichtung vorzugsweise plus einer Teflonbeschichtung oder nur eine Teflonbeschichtung. Anstelle von Keramik, Teflon oder Keramik/Teflon kann auch jede andere Antihaftbeschichtung verwendet werden.

In Figur 9 wird eine Kombination der Ausführungsbeispiele von Figur 8 und Figur 5 gezeigt.
Insbesondere ist der innere Kern 34, vorzugsweise der Kupferanteil der äußeren Oberfläche 55 des Kontaktrohrs 27 nicht mit der Schutzbeschichtung 49 bedeckt. Die Teflonbeschichtung kann sich auch über die keramische Schicht 49 bis zum Ende des Kontaktrohrs 27 erstrecken.

Ebenso kann die Schutzbeschichtung 49 sich auch auf den Anteil 52 des Materials 34 erstrecken (Fig. 10).

Figur 12 zeigt ein weiteres Ausführungsbeispiel eines Kontaktrohrs 27 mit einer Kontaktdüse 25, die im Wesentlichen den gleichen Querschnitt aufweist wie das Kontaktrohr 27, wobei im Inneren der Kontaktdüse 25 die Drahtzufuhr 28 abgeknickt ist, so dass der Draht 30 schräg gegenüber der Stirnseite 44 des Kontaktrohrs 27 aus dem Kontaktrohr 27 heraustritt.

Beschichtung innerhalb eines Spaltes eines einzelnen Bauteils aufzubringen.

Ebenso weist die Vorrichtung SE die Möglichkeit auf, dass die Pendelbewegung nicht symmetrisch ausgeführt wird, sondern aufgrund von Änderungen während des Verlaufs des Verfahrens (Erwärmung, keine optimale Ausrichtung von Spaltung vom Schutzgasrohr, ...) das Schutzgasrohr bzw. die Schweißanlage gegen den Spalt neu justiert wird. Diese kann automatisch erfolgen oder durch einen manuellen Eingriff eines Operators.

## Patentansprüche

1. Vorrichtung (SE) zum Engspaltschweißen,
die ein Schutzgasrohr (60) aufweist,
innerhalb dessen (60) ein Kontaktrohr (27) mit einer Drahtzufuhr (28) für einen Schmelzdraht (30) angeordnet ist,
**dadurch gekennzeichnet, dass**
das Schutzgasrohr (60) nur am Ende (31),
Materialien mit hoher thermischer Wärmeleitfähigkeit aufweist,
wobei das metallische Material am Ende (31) des Schutzgasrohres (60) eine höhere thermische Wärmeleitfähigkeit aufweist als am Anfang (23) des Schutzgasrohres (60),
insbesondere Molybdän (Mo) oder Wolfram (W) oder deren Legierungen, oder Kupfer (Cu) oder eine Kupferlegierung aufweist.

2. Vorrichtung nach Anspruch 1,
**dadurch gekennzeichnet, dass**
das Schutzgasrohr (60) rechteckig ausgebildet ist.

3. Vorrichtung nach Anspruch 1 oder 2,
**dadurch gekennzeichnet, dass**
das Schutzgasrohr (60) eine aktive Kühlung aufweist, insbesondere Kühlrohre und
insbesondere am Ende (31).

4. Vorrichtung nach Anspruch 1,
**dadurch gekennzeichnet, dass**
das Kontaktrohr (27) aus einem inneren Kern (34) aus einem zweiten Material und
einem äußeren Mantel (37) aus einem ersten Material aufgebaut ist,
wobei der Mantel (37) den inneren Kern (34) größtenteils, insbesondere mindestens zu 90% umhüllt,
wobei das erste Material (37) von dem zweiten Material (34) verschieden ist,
insbesondere dass das zweite Material (34) eine Legierung mit hoher Wärmeleitfähigkeit aufweist,
ganz insbesondere dass die Wärmeleitfähigkeit des zweiten Materials (34) höher ist als die des ersten Materials (34), insbesondere dass das zweite Material (34) Kupfer oder eine Kupferlegierung ist.

5. Vorrichtung nach Anspruch 1 oder 4,
**dadurch gekennzeichnet, dass**
dass das Kontaktrohr (27) aus einem inneren Kern (34) und einem äußeren Mantel (37) aufgebaut ist,
dass das Kontaktrohr (27) zumindest am Ende (43), insbesondere nur am Ende (43),
auf der äußeren Mantelfläche eine Antihaftbeschichtung (49),
insbesondere eine keramische Beschichtung (13) aufweist, und dass die Beschichtung (49) auf dem Mantel (37) oder dem inneren Kern (34) aufgebracht ist.

6. Vorrichtung nach Anspruch 1, 4 oder 5,
**dadurch gekennzeichnet, dass**
dass das Kontaktrohr (27) aus einem inneren Kern (34) und einem äußeren Mantel (37) aufgebaut ist und
dass der innere Kern (34) nur am Ende (43) des Kontaktrohrs (27) einen Teil (52) der äußeren Mantelfläche des Kontaktrohrs (27) bildet.

7. Vorrichtung nach Anspruch 1, 4, 5 oder 6,
**dadurch gekennzeichnet, dass**
das Kontaktrohr (27) ein Ende (43) mit einer Stirnseite (44) und eine Längsachse (r) aufweist und
dass die Längsachse (r) einen von 90° verschiedenen Winkel mit der Stirnseite (44) des Endes (43) bildet.

8. Vorrichtung nach Anspruch 1, 4, 5, 6 oder 7,
**dadurch gekennzeichnet, dass**
dass das Kontaktrohr (27) am Ende eine Kontaktdüse (25) aufweist,
dass das Kontaktrohr (27) eine Mantelfläche aufweist, und dass ein Ende der Kontaktdüse (25) nicht hinausragt über eine in Längsrichtung des Kontaktrohrs (27) gedachte Verlängerung (46) der Mantelfläche.

9. Vorrichtung nach Anspruch 1, 4, 5, 6, 7 oder 8,
**dadurch gekennzeichnet, dass**
das Kontaktrohr (27) kühlbar ist,
insbesondere im Innern (34).

10. Vorrichtung nach Anspruch 5,
**dadurch gekennzeichnet, dass**
die Antihaftbeschichtung (49), insbesondere die keramische Beschichtung (13) sich nicht über die äußere Oberfläche (55) erstreckt,
die durch den inneren Kern (34) des Kontaktrohrs (27) gebildet ist.

11. Vorrichtung nach Anspruch 1, 2, 3 oder 4,
**dadurch gekennzeichnet, dass**
das Schutzgasrohr (60) am äußersten Ende (13) keramisch (28) ausgebildet ist und
oberhalb des keramischen Teils (28) ein Block (31) mit erhöhter Wärmeleitfähigkeit vorhanden ist.

12. Vorrichtung nach Anspruch 1, 4, 5, 6, 7, 8, 9 oder 10, bei dem die Drahtzufuhr (28) vor dem Austritt aus dem Kontaktrohr (27) einen geknickten Verlauf für den Draht (30) aufweist.

13. Verfahren zum Engspaltschweißen, mit der Vorrichtung (SE) gemäß den Ansprüchen 1 bis 12,
bei dem das Kontaktrohr (27) gegenüber dem Spalt (10) während des Schweißverfahrens neu ausgerichtet wird.

## Claims

1. Apparatus (SE) for narrow-gap welding,
which has an inert gas tube (60),
within which (60) a contact tube (27) is arranged, having a wire feed (28) for a melting wire (30),
**characterized in that**
only at the end (31),
the inert gas tube (60) has materials with a high thermal conductivity,
wherein the metallic material at the end (31) of the inert gas tube (60) has a higher thermal conductivity than that at the start (23) of the inert gas tube (60), and
in particular has molybdenum (Mo), tungsten (W) or their alloys, or copper (Cu) or a copper alloy.

2. Apparatus according to Claim 1,
**characterized in that**
the inert gas tube (60) is rectangular.

3. Apparatus according to Claim 1 or 2,
**characterized in that**
the inert gas tube (60) has active cooling,
in particular cooling tubes and
in particular at the end (31).

4. Apparatus according to Claim 1,
**characterized in that**
the contact tube (27) is formed from an inner core (34) composed of a second material and
from an outer jacket (37) composed of a first material, wherein the jacket (37) sheaths the majority of the inner core (34), in particular at least 90% of it,
wherein the first material (37) is not the same as the second material (34),
in particular **in that** the second material (34) has an alloy with a high thermal conductivity,
very particularly **in that** the thermal conductivity of the second material (34) is higher than that of the first material (37),
in particular **in that** the second material (34) is copper or a copper alloy.

5. Apparatus according to Claim 1 or 4,
**characterized in that**
the contact tube (27) is formed from an inner core (34) and an outer jacket (37),
**in that**, at least at the end (43),
in particular only at the end (43),
the contact tube (27)
has a non-stick coating (49) on the outer jacket surface, in particular a ceramic coating (13),
and **in that** the coating (49) is applied to the jacket (37) or to the inner core (34).

6. Apparatus according to Claim 1, 4 or 5,
**characterized in that**
the contact tube (27) is formed from an inner core (34) and an outer jacket (37), and
**in that**, only at the end (43) of the contact tube (27), the inner core (34) forms a part (52) of the outer jacket surface of the contact tube (27).

7. Apparatus according to Claim 1, 4, 5 or 6,
**characterized in that**
the contact tube (27) has an end (43) with an end face (44) and a longitudinal axis (r), and
**in that** the longitudinal axis (r) forms an angle other than 90° with the end face (44) of the end (43).

8. Apparatus according to Claim 1, 4, 5, 6 or 7,
**characterized in that**
the contact tube (27) has a contact nozzle (25) at the end,
**in that** the contact tube (27) has a jacket surface, and
**in that** one end of the contact nozzle (25) does not project beyond an imaginary extension (46) of the jacket surface in the longitudinal direction of the contact tube (27).

9. Apparatus according to Claim 1, 4, 5, 6, 7 or 8,
**characterized in that**
the contact tube (27) is coolable,
in particular in the interior (34).

10. Apparatus according to Claim 5,
**characterized in that**
the non-stick coating (49), in particular the ceramic coating (13), does not extend over the outer surface (55), which is formed by the inner core (34) of the contact tube (27).

11. Apparatus according to Claim 1, 2, 3 or 4,
**characterized in that**
the inert gas tube (60) is ceramic (28) at the outermost end (13), and
a block (31) of higher thermal conductivity is provided above the ceramic part (28).

12. Apparatus according to Claim 1, 4, 5, 6, 7, 8, 9 or 10, in which, before emerging from the contact tube (27), the wire feed (28) has a bent profile for the wire (30).

13. Method for narrow-gap welding,
having the apparatus (SE) according to Claims 1 to 12, in which the contact tube (27) is realigned with respect to the gap (10) during the welding process.

## Revendications

1. Dispositif (SE) de soudure à intervalle étroit,
qui a un tuyau (60) de gaz de protection,
à l'intérieur duquel (60) est disposé un tuyau (27) de contact ayant une amenée (28) d'un fil (30) fusible, **caractérisé en ce que**
le tuyau (60) de gaz de protection a, seulement à une extrémité (31),
des matériaux ayant une grande conductibilité thermique, dans lequel le matériau métallique, à l'extrémité (31) du tuyau (60) de gaz de protection,
a une conductibilité thermique plus grande qu'au début (23) du tuyau (60) de gaz de protection,
en ayant notamment du molybdène (Mo), du tungstène (W) ou leurs alliages ou du cuivre ou un alliage de cuivre.

2. Dispositif suivant la revendication 1,
**caractérisé en ce que**
le tuyau (60) de gaz de protection est rectangulaire.

3. Dispositif suivant la revendication 1 ou 2,
**caractérisé en ce que**
le tuyau (60) de gaz de protection a un refroidissement actif,
notamment des tubes de refroidissement et
notamment à l'extrémité (31).

4. Dispositif suivant la revendication 1,
**caractérisé en ce que**
le tuyau (27) de contact est formé d'un noyau (34) intérieur en un deuxième matériau et
d'une enveloppe (37) extérieure en un premier matériau, l'enveloppe (37) enveloppant le noyau (34) intérieur pour la plus grande partie,
notamment sur au moins 90%, le premier matériau (37) étant différent du deuxième matériau (34),
notamment **en ce que** le deuxième matériau (34) a un alliage ayant une grande conductibilité thermique,
tout particulièrement **en ce que** la conductibilité thermique du deuxième matériau (34) est plus grande que celle du premier matériau (34),
notamment **en ce que** le deuxième matériau (34) est du cuivre ou un alliage de cuivre.

5. Dispositif suivant la revendication 1 ou 4,
**caractérisé en ce que**
le tuyau (27) de contact est formé d'un noyau (34) intérieur et d'une enveloppe (37) extérieure,
**en ce que** le tuyau (27) de contact a, au moins à l'extrémité (43),
notamment à l'extrémité (43),
sur la surface latérale extérieure, une couche (49) anti-adhérente,
notamment un revêtement (13) en céramique,
et **en ce que** le revêtement (49) est déposé sur l'enveloppe (37) ou sur le noyau (34) intérieur.

6. Dispositif suivant la revendication 1, 4 ou 5,
**caractérisé en ce que**
le tuyau (27) de contact est formé d'un noyau (34) intérieur et d'une enveloppe (37) extérieure et
**en ce que** le noyau (34) intérieur forme, seulement à l'extrémité (43) du tuyau (37) de contact, une partie (52) de la surface latérale extérieure du tuyau (27) de contact.

7. Dispositif suivant la revendication 1, 4, 5 ou 6,
**caractérisé en ce que**
le tuyau (27) de contact a une extrémité (43) ayant un côté (44) frontal et un axe (r) longitudinal et
**en ce que** l'axe (r) longitudinal fait un angle différent de 90° avec le côté (44) frontal de l'extrémité (43).

8. Dispositif suivant la revendication 1, 4, 5, 6 ou 7,
**caractérisé en ce que**
le tuyau (27) de contact a, à l'extrémité, une buse (25) de contact,
**en ce que** le tuyau (27) de contact a une surface latérale et
**en ce qu'**une extrémité de la buse (25) de contact ne dépasse pas d'un prolongement (46), imaginaire dans la direction longitudinale du tuyau (27) de contact, de la surface latérale.

9. Dispositif suivant la revendication 1, 4, 5, 6, 7 ou 8,
**caractérisé en ce que**
le tuyau de contact peut être refroidi,
notamment à l'intérieur (34).

10. Dispositif suivant la revendication 5,
**caractérisé en ce que**
le revêtement (49) anti-adhérent, notamment le revêtement (13) en céramique, ne s'étend pas sur la surface (55) extérieure,
qui est formée sur le noyau (34) intérieur du tuyau (27) de contact.

11. Dispositif suivant la revendication 1, 2, 3 ou 4,
**caractérisé en ce que**
le tuyau (60) pour du gaz de protection, à l'extrémité (13) la plus à l'extérieure, est en céramique (28) et au-dessus de la partie (28) en céramique, il y un bloc (31) ayant une conductibilité thermique plus grande.

12. Dispositif suivant la revendication 1, 4, 5, 6, 7, 8, 9 ou 10, dans lequel l'amenée (28) de fil a, avant la sortie du tuyau (27) de contact, un tracé coudé pour le fil (30).

13. Procédé de soudure à intervalle étroit,
par le dispositif (SE) suivant les revendications 1 à 12, dans lequel on oriente à nouveau le tuyau (27) de contact par rapport à l'intervalle (10) pendant le procédé de soudure.
